# EUROPEAN PATENT APPLICATION

(11) **EP 4 773 304 A1**
(43) Date of publication of application: **08.07.2026**
(21) Application number: 24908115.9
(22) Date of filing: 19.12.2024
(51) Int. Cl.: H01M 10/0567, H01M 4/58, H01M 10/052, H01M 4/02

(54) **LITHIUM SECONDARY BATTERY**

(30) Priority: 21.12.2023 KR 20230188775
(71) Applicant: LG Energy Solution, Ltd., Seoul 07335 (KR)
(72) Inventor: KO, Yoon Seok, Daejeon 34122 (KR); LEE, Chul Haeng, Daejeon 34122 (KR); AHN, Kyoung Ho, Daejeon 34122 (KR); HAN, Jun Hyeok, Daejeon 34122 (KR); OH, Young Ho, Daejeon 34122 (KR); JEONG, You Kyeong, Daejeon 34122 (KR); IM, Tae Yeong, Daejeon 34122 (KR); SUH, Soo Min, Daejeon 34122 (KR)
(74) Representative: Hoffmann Eitle
(86) International application number: PCT/KR2024/020709
(87) International publication number: WO 2025/135832

(57) **Abstract**

The present invention provides a lithium secondary battery comprising a positive electrode, a negative electrode, a separator; and a non-aqueous electrolyte, wherein the positive electrode includes a positive electrode active material, the positive electrode active material includes lithium iron phosphate particles, a loading amount of the positive electrode is 450 mg/25 cm² to 740 mg/25 cm², the non-aqueous electrolyte includes a lithium salt, an organic solvent, and an additive, the additive includes at least one selected from the group consisting of compounds represented by Formulas 1 to 3 below, and the additive is included in the non-aqueous electrolyte in an amount of 0.1 wt% to 3 wt%.

## Description

### TECHNICAL FIELD

The present invention relates to a lithium secondary battery.

### BACKGROUNDART

As personal information technology (IT) devices and computer networks develop due to the development of the information society, and the overall dependence of society on electric energy increases, there is a demand for technology development to efficiently store and utilize electric energy.

Among the developed technologies, secondary batteries are the most suitable for various applications, and among the secondary batteries, there is a growing interest in lithium secondary batteries, which have the highest energy density so far and may be miniaturized enough to be applied in personal IT devices.

### DISCLOSURE OF THE INVENTION

### TECHNICAL PROBLEM

The present invention provides lithium secondary batteries having excellent low-temperature output performance by improving the impregnation property of the positive electrode into a non-aqueous electrolyte. The secondary batteries of the present invention include a positive electrode including lithium iron phosphate particles as a positive electrode active material, in a specific loading amount or more.

### MEANS FOR SOLVING THE PROBLEM

[1] The present invention provides a lithium secondary battery including a positive electrode, a negative electrode, a separator, and a non-aqueous electrolyte. The positive electrode includes a positive electrode active material, and the positive electrode active material includes lithium iron phosphate particles. The loading amount of the positive electrode is 450 mg/25 cm² to 740 mg/25 cm², and the non-aqueous electrolyte includes a lithium salt, an organic solvent, and an additive. The additive includes at least one selected from the group consisting of compounds represented by Formulas 1 to 3 below, and the additive is included in the non-aqueous electrolyte in an amount of 0.1 % by weight to 3 % by weight. 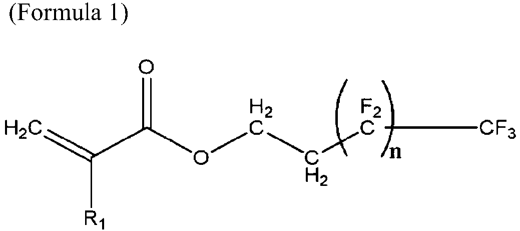 In Formula 1, R₁ is hydrogen or an alkyl group having 1 to 3 carbon atoms, and n is an integer of 1 to 10. 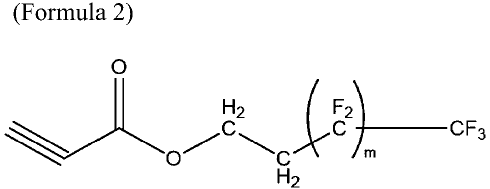 In Formula 2, m is an integer of 0 to 18. 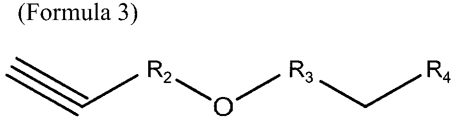 In Formula 3, R₂ and R₃ are each independently an alkylene group having 1 to 10 carbon atoms, and R₄ is an alkyl group having 1 to 20 carbon atoms that is substituted with one or more fluorine atoms.
[2] The present invention provides the lithium secondary battery according to the above [1], wherein, in Formula 1, n is an integer of 3 to 8.
[3] The present invention provides the lithium secondary battery according to at least one of the above [1] to [2], wherein, in Formula 1, R₁ is hydrogen.
[4] The present invention provides the lithium secondary battery according to at least one of the above [1] to [3], wherein the compound represented by Formula 1 includes at least one selected from the group consisting of compounds represented by Formulas 1-1 to 1-3: 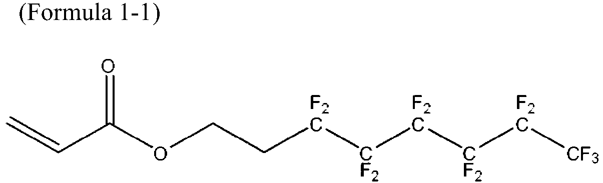 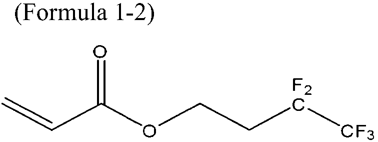 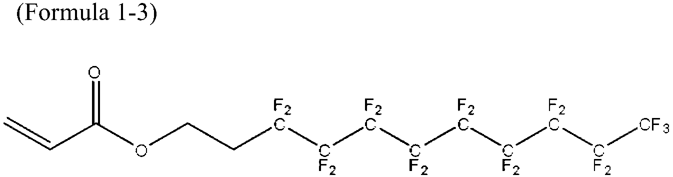
[5] The present invention provides the lithium secondary battery according to at least one of the above [1] to [4], wherein, in Formula 2, m is an integer of 2 to 8.
[6] The present invention provides the lithium secondary battery according to at least one of the above [1] to [5], wherein the compound represented by Formula 2 includes at least one selected from the group consisting of compounds represented by Formulas 2-1 to 2-4: 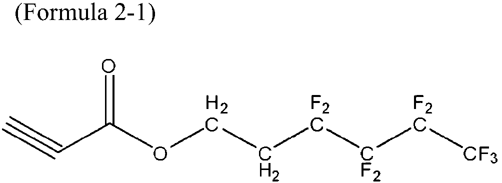 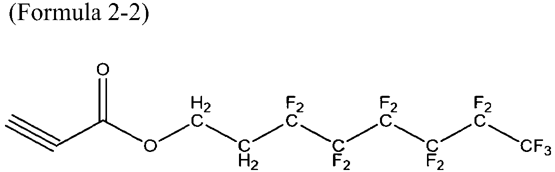 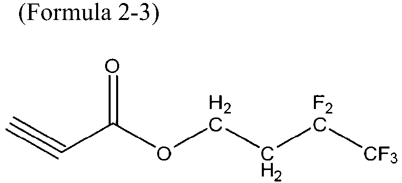 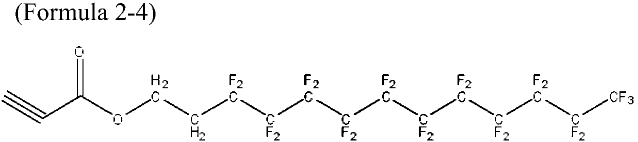
[7] The present invention provides the lithium secondary battery according to at least one of the above [1] to [6], wherein, in Formula 3, R₂ and R₃ are each independently an alkylene group having 1 to 5 carbon atoms, and R₄ is an alkyl group having 3 to 20 carbon atoms that is substituted with one or more fluorine atoms.
[8] The present invention provides the lithium secondary battery according to at least one of the above [1] to [7], wherein, in Formula 3, R₄ is an alkyl group having 4 to 8 carbon atoms that is substituted with one or more fluorine atoms.
[9]The present invention provides the lithium secondary battery according to at least one of the above [1] to [8], wherein the compound represented by Formula 3 includes a compound represented by Formula 3-1: 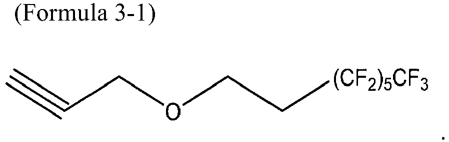
[10] The present invention provides the lithium secondary battery according to at least one of the above [1] to [9], wherein the loading amount of the positive electrode is 500 mg/25 cm² to 600 mg/25 cm².
[11] The present invention provides the lithium secondary battery according to at least one of the above [1] to [10], wherein the non-aqueous electrolyte further includes vinylene carbonate.
[12] The present invention provides the lithium secondary battery according to at least one of the above [1] to [11], wherein the organic solvent includes a cyclic carbonate-based solvent and a linear carbonate-based solvent.
[13] The present invention provides the lithium secondary battery according to at least one of the above [1] to [12], wherein the linear carbonate-based solvent includes dimethyl carbonate.
[14] The present invention provides the lithium secondary battery according to at least one of the above [1] to [13], wherein the lithium iron phosphate particles include a compound represented by Formula A: **[0033]**

   (Formula A) Li₁₊ₐFe₁₋ₛMₛ(PO_{4-b})X_{b}

   wherein, M is at least one element selected from Co, Ni, Mn, Al, Mg, Ti, and V, X is F, S, or N, and s, a, and b satisfy 0≤s≤0.5, -0.5≤a≤+0.5, 0≤b≤0.1, respectively.
[15] The present invention provides the lithium secondary battery according to at least one of the above [1] to [14], wherein the lithium iron phosphate particles include LiFePO₄.

### EFFECT OF THE INVENTION

The lithium secondary battery according to the present invention includes a positive electrode having a specific loading amount or more and including lithium iron phosphate particles as a positive electrode active material; and a non-aqueous electrolyte including at least one compound represented by the formulas 1 to 3 as an additive in a specific content. According to the lithium secondary battery of the present invention, the electrolyte impregnation property of the positive electrode having a high loading amount may be improved by using a non-aqueous electrolyte including the above-described additive in a specific content, so that the capacity development property of the lithium secondary battery may be excellent, and the life performance and resistance characteristics may be improved.

### MODE FOR CARRYING OUR THE INVENTION

It is noted that the terms or words used in this specification and claims should not be interpreted as limited to their usual or dictionary meanings, and should be interpreted as meanings and concepts that conform to the technical idea of the present invention based on the principle that the inventors can appropriately define the concept of the term in order to explain their own invention in the best manner.

The terms used herein are only used to describe exemplary embodiments and are not intended to limit the present invention. Singular expressions include plural expressions unless the context clearly indicates otherwise.

As used herein, it should be understood that the terms "comprise,""include," or "have," etc., are intended to specify the presence of a feature, number, step, component, or combination thereof, but do not exclude in advance the possibility of the presence or addition of one or more other features, numbers, steps, components, or combinations thereof.

As used herein, "%" means "wt%" or "% by weight" unless otherwise explicitly indicated.

In the description of "carbon number a to b" in the specification, "a" and "b" mean the number of carbon atoms included in a specific functional group. That is, the functional group may include "a" to "b" carbon atoms.

As used herein, "substituted" means that at least one hydrogen bonded to a carbon is substituted with an element other than hydrogen, for example, an alkyl group having 1 to 5 carbon atoms or a fluorine element, unless otherwise defined.

In this specification, the average particle diameter (D50) may be defined as a particle diameter corresponding to 50% of the volume accumulation amount in the particle diameter distribution curve of the particles. The average particle diameter (D50) may be measured using, for example, a laser diffraction method. The laser diffraction method is generally capable of measuring particle sizes from the submicron region down to a few millimeters and may obtain results with high reproducibility and high resolution.

As used herein, the words "about," "approximately," and "substantially" are intended to mean at or near the range of values or degrees to account for inherent manufacturing and material tolerances.

Typically, lithium secondary batteries are manufactured by injecting or impregnating a non-aqueous electrolyte into an electrode assembly including a positive electrode, a negative electrode, and a porous separator.

Carbon-based active materials and silicon-based active materials are considered as negative active materials for these lithium secondary batteries. Meanwhile, lithium-containing cobalt oxide, LiMnO₂ with a layered crystal structure, LiMn₂O₄ with a spinel crystal structure, and lithium-containing nickel oxide (LiNiO₂) are being considered as positive active materials.

Recently, lithium iron phosphate (*e.g.*, LiFePO₄)-based active materials, which have excellent thermal stability and are relatively inexpensive, are being considered as positive electrode active materials.

However, since the lithium iron phosphate-based active material has a low cost compared to lithium cobalt oxide, lithium nickel oxide, etc., it is necessary to use a high loading amount of lithium iron phosphate-based active material in order to increase the energy density of the positive electrode and lithium secondary battery including it, and the high-loading lithium iron phosphate positive electrode has a problem that it is difficult for the non-aqueous electrolyte to be sufficiently impregnated in the positive electrode, resulting in difficulty in capacity expression, increased resistance, and decreased lifetime.

In view of the foregoing, the present invention provides a lithium secondary battery having excellent low-temperature output performance by improving the impregnation property of the positive electrode into a non-aqueous electrolyte. The lithium secondary battery of the present invention includes a positive electrode having a specific loading amount or more, and the positive electrode includes lithium iron phosphate particles as a positive electrode active material.

Hereinafter, the present invention will be described in more detail.

### Lithium Secondary Battery

The present invention relates to a lithium secondary battery.

According to one embodiment, a lithium secondary battery of the present invention includes a positive electrode, a negative electrode, a separator, and a non-aqueous electrolyte, in which the positive electrode includes a positive electrode active material, the positive electrode active material includes lithium iron phosphate particles, a loading amount of the positive electrode is about 450 mg/25 cm² to 740 mg/25 cm², the non-aqueous electrolyte includes a lithium salt, an organic solvent, and an additive, the additive includes at least one selected from the group consisting of compounds represented by Formulas 1 to 3 below, and the additive is included in the non-aqueous electrolyte in an amount of about 0.1 % by weight to 3 % by weight.

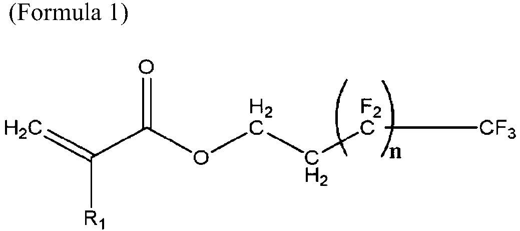

In Formula 1, R₁ is hydrogen or an alkyl group having 1 to 3 carbon atoms, and n is an integer of 1 to 10

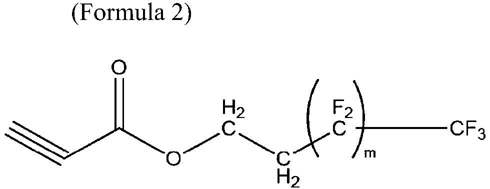

In Formula 2, m is an integer of 0 to 18.

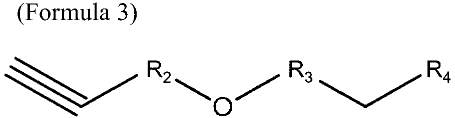

In Formula 3, R₂ and R₃ are each independently an alkylene group having 1 to 10 carbon atoms, and R₄ is an alkyl group having 1 to 20 carbon atoms that is substituted with one or more fluorine atoms.

The lithium secondary battery according to the present invention includes: a positive electrode having a specific loading amount of more and including lithium iron phosphate particles as a positive electrode active material; and a non-aqueous electrolyte including at least one compound represented by Formulas 1 to 3 as an additive in a specific content. According to the lithium secondary battery of the present invention, the electrolyte impregnation property of a positive electrode having a high loading amount may be improved by using a non-aqueous electrolyte including the above-described additive in a specific content, so that the capacity development property of the lithium secondary battery may be excellent, and the life performance and resistance characteristics may be improved.

The lithium secondary battery includes a positive electrode, a negative electrode, a separator, and a non-aqueous electrolyte. For example, the lithium secondary battery includes a positive electrode, a negative electrode opposite to the positive electrode, a separator interposed between the positive electrode and the negative electrode, and a non-aqueous electrolyte.

According to one embodiment, the lithium secondary battery may be manufactured by a method including steps of: manufacturing an electrode assembly including a positive electrode, a negative electrode, and a separator; accommodating the electrode assembly in a battery case; preparing a non-aqueous electrolyte including a lithium salt, an organic solvent, and an additive; and injecting or impregnating the non-aqueous electrolyte into the battery case.

### (1) Positive Electrode

The positive electrode includes a positive electrode active material. The positive electrode active material includes lithium iron phosphate (*e.g.*, LiFePO₄) particles.

The lithium iron phosphate particles include a compound represented by Formula A:

(Formula A) Li₁₊ₐFe₁₋ₛMₛ(PO_{4-b})X_{b}

In Formula A, M is at least one element selected from Co, Ni, Mn, Al, Mg, Ti, and V, X is F, S, or N, and s, a, and b satisfy 0≤s≤0.5, -0.5≤a≤+0.5, 0≤b≤0.1, respectively.

Formula A may be represented, for example, as LiFePO₄ (a=0, s=0, and b=0).

The lithium iron phosphate particles may be in the form of primary particles or in the form of secondary particles in which two or more primary particles are aggregated. According to one embodiment, the lithium iron phosphate particles may be in the form of primary particles.

The lithium iron phosphate particles may be made up of primary particles, secondary particles formed by agglomeration of two or more primary particles, or a mixture of primary particles and secondary particles formed by agglomeration of two or more primary particles.

When the lithium iron phosphate particles are in the form of primary particles, the average particle diameter (D50) of the lithium iron phosphate particles may be about 0.2 µm to 3.0 µm, or 0.2 µm to 2.0 µm, or 0.3 µm to 1.5 µm. In addition, when the lithium iron phosphate particles are in the form of secondary particles in which two or more primary particles are aggregated, the primary particles may have an average particle diameter (D50) of 0.2 µm to 3.0 µm, or 0.2 µm to 2.0 µm, or 0.3 µm to 1.5 µm, and the secondary particles may have an average particle diameter (D50) of 7 µm to 25 µm, or 10 µm to 20 µm.

According to one embodiment, the positive electrode active material may further include a carbon coating layer positioned on the surface of the lithium iron phosphate particles. The carbon coating layer may be introduced for the purpose of protecting the lithium iron phosphate particles, improving electrical conductivity, and the like.

The loading amount of the positive electrode is about 450 mg/25 cm² to 740 mg/25 cm².

The lithium iron phosphate particles have advantages of excellent thermal stability and relatively low cost compared to other positive electrode active materials such as lithium cobalt oxide and lithium nickel-cobalt-manganese oxide, but their specific capacity is low, so that the loading amount must be increased to implement high energy density. When the loading amount of the positive electrode is increased (*e.g.*, about 450 mg/25 cm² to 740 mg/25 cm²), it is possible to implement a high energy density battery (*e.g.*, a lithium secondary battery having a design cell capacity of at least 500 mAh and an initial discharge capacity of at least 500 mAh). However, the non-aqueous electrolyte is incapable of being sufficiently impregnated into the positive electrode, which tends to suffer from a difficult capacity development of the lithium secondary battery, increased resistance, and poor lifetime performance.

In consideration of these points, the lithium secondary battery according to the present invention uses a non-aqueous electrolyte in which at least one compound represented by Formulas 1 to 3 is selected as an additive to the non-aqueous electrolyte and the content thereof is adjusted to a specific range. Through these characteristics, the electrolyte impregnation property of the positive electrode having a loading amount of about 450 mg/25 cm² to 740 mg/25 cm² may be improved, so that the capacity of the lithium secondary battery may be expressed as an excellent level, and the life performance and resistance characteristics may be improved. As an example, the lithium secondary battery according to the present invention is advantageous in terms of improving low-temperature output characteristics.

In one embodiment, the loading of the positive electrode may be about 450 mg/25 cm² to 740 mg/25 cm², 450 mg/25 cm² to 730 mg/25 cm², 450 mg/25 cm² to 720 mg/25 cm², 450 mg/25 cm² to 710 mg/25 cm², or 450 mg/25 cm² to 700 mg/25 cm², or about 500 mg/25 cm² to 680 mg/25 cm², 500 mg/25 cm² to 650 mg/25 cm², 500 mg/25 cm² to 625 mg/25 cm², or 500 mg/25 cm² to 600 mg/25 cm².

The positive electrode may include a positive electrode current collector, and a positive electrode active material layer disposed on at least one surface of the positive electrode current collector. In this case, the positive electrode active material layer may include the above-described positive electrode active material.

The positive electrode current collector is not particularly limited as long as it has high conductivity without causing chemical changes in the battery. Examples of the positive electrode current collector include copper, stainless steel, aluminum, nickel, titanium, calcined carbon, copper or stainless steel surface-treated with carbon, nickel, titanium, or silver, and an aluminum-cadmium alloy.

The thickness of the positive electrode current collector may typically have a range of 3 µm to 500 µm.

The positive electrode current collector may have fine unevenness formed on the surface to enhance the bonding strength of the positive electrode active material. For example, the positive electrode collector may be used in various forms, such as a film, a sheet, a foil, a net, a porous body, a foam, and a non-woven fabric.

The positive electrode active material layer is disposed on at least one surface of the positive electrode current collector. According to one embodiment, the positive electrode active material layer may be disposed on one surface or both surfaces of the positive electrode current collector.

The positive electrode active material may be included in the positive electrode active material layer in an amount of about 80 wt% to 99 wt%, considering, for example, sufficient capacity of the positive electrode active material.

The positive electrode active material layer may further include a binder and/or a conductive material together with the positive electrode active material.

The binder is a component that assists in the binding of the active material and the conductive material and the binding to the current collector, and may include, for example, at least one selected from the group consisting of polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene-butadiene rubber, and fluororubber, or may include polyvinylidene fluoride.

The binder may be included in the positive electrode active material layer in an amount of about 1 wt% to 20 wt%, or about 1.2 wt% to 10 wt%, in order to sufficiently secure binding force between components such as the positive electrode active material.

The conductive material may be used to assist and improve conductivity in a secondary battery, and is not particularly limited as long as it has conductivity without causing a chemical change. For example, the positive electrode conductive material may include at least one selected from the group consisting of graphite such as natural graphite or artificial graphite; carbon blacks such as carbon black, acetylene black, KETJENBLACK^{®}, channel black, furnace black, lamp black, and thermal black; conductive fibers such as carbon fibers or metal fibers; conductive tubes such as carbon nanotubes; fluorocarbons; metal powders such as aluminum or nickel powder; conductive whiskers such as zinc oxide or potassium titanate; conductive metal oxides such as titanium oxide; and polyphenylene derivatives. According to one embodiment, the positive electrode conductive material may include carbon black in terms of improving conductivity.

The binder may be included in the positive electrode active material layer in an amount of about 1 wt% to 20 wt%, or about 1.2 wt% to 10 wt%, in order to sufficiently secure electrical conductivity.

The thickness of the positive electrode active material layer may be about 100 µm to 300 µm, or 150 µm to 250 µm.

The positive electrode may be manufactured by coating a positive electrode slurry including a positive electrode active material and optionally a binder, a conductive material, and a solvent for forming the positive electrode slurry, on the positive electrode current collector, followed by drying and rolling.

The solvent for forming the positive electrode slurry may include an organic solvent such as NMP (N-methyl-2-pyrrolidone). The solid content of the positive electrode slurry may be about 40 wt% to 90 wt%, or according to one embodiment, the solid content may be about 50 wt% to 80 wt%.

### (2) Negative Electrode

The negative electrode may be opposed to the positive electrode.

The negative electrode includes a negative electrode active material.

The negative electrode may include a negative electrode current collector, and a negative electrode active material layer disposed on at least one surface of the negative electrode current collector. The negative electrode active material may be included in the negative electrode active material layer.

The negative electrode current collector is not particularly limited as long as it has high conductivity without causing chemical changes in the battery. Examples of the negative electrode current collector include copper, stainless steel, aluminum, nickel, titanium, calcined carbon, copper or stainless steel surface-treated with carbon, nickel, titanium, or silver, and an aluminum-cadmium alloy.

The thickness of the negative electrode current collector may typically have a range of 3 µm to 500 µm.

The negative electrode current collector may have fine unevenness formed on the surface to enhance the bonding strength of the negative electrode active material. For example, the negative electrode collector may be used in various forms, such as a film, a sheet, a foil, a net, a porous body, a foam, and a non-woven fabric.

The negative electrode active material layer is disposed on at least one surface of the negative electrode current collector. According to one embodiment, the negative electrode active material layer may be disposed on one surface or both surfaces of the negative electrode current collector.

The negative electrode active material layer may include a negative electrode active material.

The negative active material is a material capable of reversibly inserting/removing lithium ions, and may include at least one selected from the group consisting of a carbon-based active material, a (semi)metal-based active material, and lithium metal, and according to one embodiment, may include at least one selected from a carbon-based active material and a (semi)metal-based active material.

The carbon-based active material may include at least one selected from the group consisting of graphite, hard carbon, soft carbon, carbon black, graphene, and fibrous carbon, and according to one embodiment, may include graphite. The graphite may include at least one selected from the group consisting of artificial graphite and natural graphite.

The average particle diameter (D50) of the carbon-based active material may be about 10 µm to 30 µm, or about 15 µm to 25 µm, in terms of ensuring structural stability during charge and discharge and reducing side reactions with the electrolyte.

Examples of the (semi)metal-based active material include least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); and lithium vanadium oxide.

In one embodiment, the (semi)metal-based active material may include a silicon-based active material.

The silicon-based active material may include a compound represented by SiOₓ (0≤x<2). In the case of SiO₂, since it does not react with lithium ions and thus cannot store lithium, x is set within the above range, and according to one embodiment, the silicon-based active material may be SiO.

The average particle diameter (D50) of the silicon-based active material may be about 1 µm to 30 µm, or about 2 µm to 15 µm, in terms of ensuring structural stability during charge and discharge and reducing side reactions with the electrolyte.

The negative electrode active material may be included in the negative electrode active material layer in an amount of about 60 wt% to 99 wt%, or about 75 wt% to 95 wt%.

The negative electrode active material layer may further include a binder and/or a conductive material together with the negative electrode active material.

The binder is used to improve the performance of the battery by improving the adhesion between the negative electrode active material layer and the negative electrode current collector, and may include, for example, at least one selected from the group consisting of polyvinylidene fluoride-hexafluoropropylene copolymer (PVDF-co-HFP), polyvinylidene fluoride (PVDF), polyacrylonitrile, poly(methyl methacrylate), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and those thereof in which hydrogen is substituted with Li, Na, or Ca, and also may include various copolymers thereof.

The binder may be included in the negative electrode active material in an amount of about 0.5 wt% to 10 wt%, or about 1 wt% to 5 wt%.

The conductive material is not particularly limited as long as it is conductive and does not cause a chemical change in the battery, and examples thereof include graphites such as natural graphite or artificial graphite; carbon blacks such as carbon black, acetylene black, KETJENBLACK^{®}, channel black, furnace black, lamp black, and thermal black; conductive fibers such as carbon fibers or metal fibers; conductive tubes such as carbon nanotubes; fluorocarbon; metal powder such as aluminum or nickel powder; conductive whiskers such as zinc oxide or potassium titanate; conductive metal oxides such as titanium oxide; and conductive materials such as polyphenylene derivatives.

The conductive material may be included in the negative electrode active material in an amount of about 0.5 wt% to 10 wt%, or about 1 wt% to 5 wt%.

The thickness of the negative electrode active material layer may be about 50 µm to 300 µm, or 100 µm to 200 µm.

The loading amount of the negative electrode active material layer may be about 200 mg/25 cm² to 500 mg/25 cm², or about 250 mg/25 cm² to 400 mg/25 cm².

The negative electrode may be manufactured by coating a negative electrode slurry including a negative electrode active material, a binder, a conductive material, and/or a solvent for forming the negative electrode slurry, on at least one surface of the negative electrode current collector, followed by drying and rolling.

The solvent for forming the negative electrode slurry may include, for example, at least one selected from the group consisting of distilled water, NMP (N-methyl-2-pyrrolidone), ethanol, methanol, and isopropyl alcohol, or may include distilled water, in terms of facilitating dispersion of the negative electrode active material, the binder, and/or the conductive agent. The solid content of the negative electrode slurry may be about 30 wt% to 80 wt%, or according to one embodiment, the solid content may be about 40 wt% to 70 wt%.

### (3) Separator

The separator may be interposed between the positive electrode and the negative electrode.

Examples of the separator include a porous polymer film commonly used as a conventional separator, for example, a porous polymer film made of a polyolefin polymer such as an ethylene homopolymer, a propylene homopolymer, an ethylene/butene copolymer, an ethylene/hexene copolymer, and an ethylene/methacrylate copolymer, which may be used alone or in a laminated manner, or a conventional porous nonwoven fabric, for example, a nonwoven fabric made of high-melting-point glass fiber, polyethylene terephthalate fiber, and the like, but is not limited thereto. Further, a coated separator containing ceramic components or polymer materials may be used to ensure heat resistance or mechanical strength, and may optionally be used in a single-layer or multi-layer structure.

### (4) Non-aqueous Electrolyte

### 1) Lithium Salt

First, a lithium salt is described as follows.

In the non-aqueous electrolyte for a lithium secondary battery according to one embodiment of the present invention, the lithium salt may be any of those commonly used in electrolytes for lithium secondary batteries without limitation, and may include, for example, Li⁺ as a cation, and, as an anion, at least one slected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻. For example, the lithium salt may be at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂, and LiBETI (LiN(SO₂CF₂CF₃)₂). The lithium salt may be one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂), and LiBETI (LiN(SO₂CF₂CF₃)₂) either alone or in mixture of two or more thereof, or may be LiPF₆.

The lithium salt may be appropriately changed within a normally usable range, but may be included in the electrolyte at a concentration of about 0.8 M to 3.0 M, or about 1.0 M to 3.0 M, in order to obtain the effect of forming a film for suppressing corrosion on the electrode surface. In this case, the unit "M" may refer to a molar concentration, which means "mol/L."

When the concentration of the lithium salt satisfies the above range, the viscosity of the non-aqueous electrolyte may be controlled to implement optimal impregnation property, and the mobility of lithium ions may be improved, thereby obtaining the effect of improving the capacity characteristics and cycle characteristics of the lithium secondary battery.

### 2) Organic Solvent

The organic solvent may be used without limitation as long as it is an organic solvent used as a non-aqueous electrolyte for a lithium secondary battery.

For example, the organic solvent may include at least one selected from the group consisting of a cyclic carbonate-based solvent and a linear carbonate-based solvent. According to one embodiment, the organic solvent may include a cyclic carbonate-based solvent and a linear carbonate-based solvent. The organic solvent may be made up of a cyclic carbonate-based solvent and a linear carbonate-based solvent.

The cyclic carbonate-based solvent may include at least one selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate (VC), and according to one embodiment, may include ethylene carbonate in that it is a high-viscosity organic solvent with a high dielectric constant and thus may easily dissociate the lithium salt in the electrolyte.

For example, the cyclic carbonate-based solvent may include at least one selected from the group consisting of dimethyl carbonate (DMC), diethyl carbonate (DEC), dipropyl carbonate, ethyl methyl carbonate (EMC), methyl propyl carbonate, and ethyl propyl carbonate, and may include dimethyl carbonate as an organic solvent having low viscosity and low dielectric constant, and particularly in terms of excellent electrolyte impregnation property.

When the linear carbonate-based solvent includes dimethyl carbonate, the linear carbonate-based solvent may further include ethyl methyl carbonate together with the dimethyl carbonate. When the linear carbonate further includes ethyl methyl carbonate, the stability of the solid electrolyte interphase (SEI) film may be further improved.

The volume ratio of the cyclic carbonate-based solvent and the linear carbonate-based solvent may be about 10:90 to 50:50, or about 15:85 to 50:50, or according to one embodiment, may be about 20:80 to 35:65. When the volume ratio is in the above range, high ion transfer characteristics and low viscosity of the electrolyte may be achieved.

In one embodiment, the organic solvent may include about 10 vol% to 50 vol% of the ethylene carbonate, about 5 vol% to 55 vol% of the dimethyl carbonate, and about 20 vol% to 70 vol% of the ethyl methyl carbonate, or may include about 20 vol% to 40 vol% of the ethylene carbonate, about 7 vol% to 45 vol% of the dimethyl carbonate, and about 25 vol% to 65 vol% of the ethyl methyl carbonate, or according to one embodiment, may include about 25 vol% to 35 vol% of the ethylene carbonate, about 7 vol% to 15vol% of the dimethyl carbonate, and about 50 vol% to 68 vol% of the ethyl methyl carbonate. Within the above range, the stability of the negative electrode SEI film is improved while improving the electrolyte impregnation property.

Meanwhile, the organic solvent may be used without limitation by adding organic solvents commonly used in non-aqueous electrolytes as needed. For example, the organic solvent may further include at least one organic solvent from an ester-based solvent, an ether-based solvent, a glyme-based solvent, and a nitrile-based solvent.

The ester-based solvent may include at least one selected from the group consisting of methyl acetate, ethyl acetate, propyl acetate, butyl acetate, methyl propionate, ethyl propionate, propyl propionate, butyl propionate, γ-butyrolactone, γ-valerolactone, γ-caprolactone, σ-valerolactone, and ε-caprolactone.

The ether-based solvent may be any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent has a high dielectric constant and low surface tension compared to the linear carbonate-based solvent, and has low reactivity with metals. Examples thereof may include at least one selected from the group consisting of dimethoxyethane (glyme, DME), diethoxyethane, diglyme, tri-glyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

Meanwhile, the remainder of the non-aqueous electrolyte, excluding the lithium salt and additives, may be organic solvents unless otherwise specified.

### (3) Additive

The non-aqueous electrolyte of the present invention contains an additive.

The additive includes at least one selected from the group consisting of compounds represented by Formulas 1 to 3:

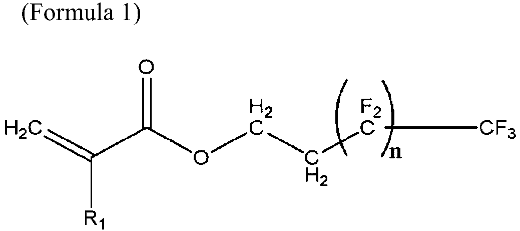

In Formula 1, R₁ is hydrogen or an alkyl group having 1 to 3 carbon atoms, and n is an integer of 1 to 10.

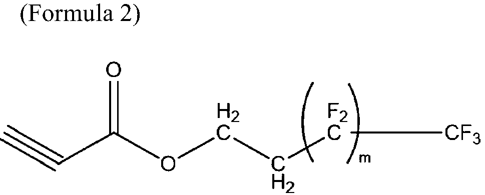

In Formula 2, m is an integer of 0 to 18.

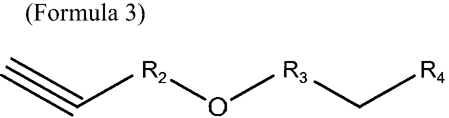

In Formula 3, R₂ and R₃ are each independently an alkylene group having 1 to 10 carbon atoms, and R₄ is an alkyl group having 1 to 20 carbon atoms that is substituted with one or more fluorine atoms.

For example, at least one compound among the compounds represented by the formulas 1 to 3 may significantly improve the electrolyte impregnation property of the positive electrode having the loading amount (450 mg/25 cm² to 740 mg/25 cm²) and prevent the problem of lithium precipitation at low temperatures, thereby improving the output characteristics of the lithium secondary battery, particularly the low-temperature output characteristics, and implementing an excellent capacity development rate.

In addition, at least one of the compounds represented by Formulas 1 to 3 includes a vinyl group or a propargyl group-containing functional group in its structure, which may be easily reductively decomposed on the surface of the negative electrode including a silicon-based active material, thereby forming an SEI film having low resistance and high passivation ability. In addition, at least one of the compounds represented by Formulas 1 to 3 includes a fluorocarbon functional group substituted with one or more fluorine atoms at a structural terminal, which may form a film having secured oxidation resistance on the surface of the positive electrode, thereby suppressing the elution of the transition metal from the positive electrode, suppressing the electrodeposition and precipitation of the eluted transition metal on the negative electrode, and preventing an internal short circuit.

In Formula 1, R₁ may be hydrogen or an alkyl group having 1 to 3 carbon atoms, or may be oxygen.

In Formula 1, n may be an integer of 1 to 10, and, in one embodiment, an integer of 3 to 8. When n is 0, it acts as a non-solvent, making it difficult to effectively form an electrode film containing an inorganic component such as LiF. When n is an integer greater than 10, miscibility with organic solvents may be reduced.

The compound represented by Formula 1 may include at least one selected from the group consisting of compounds represented by Formulas 1-1 to 1-3, and in one embodiment, may include a compound represented by Formula 1-1:

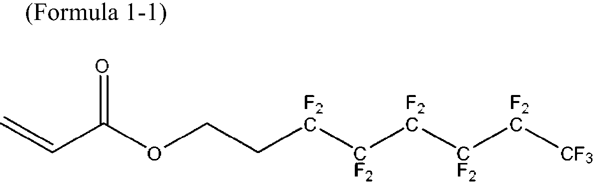

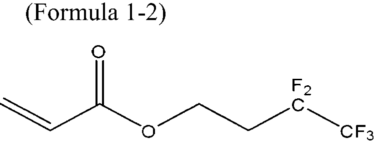

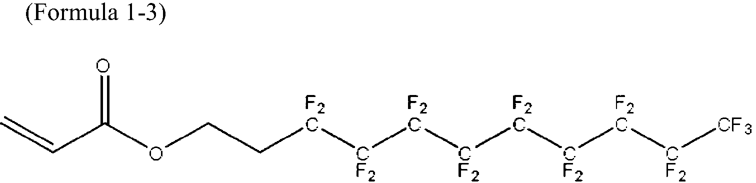

In Formula 2, m may be an integer of 0 to 18, for example, an integer of 1 to 10, or in one embodiment, may be an integer of 2 to 8.

When m satisfies the above range, the thermal property of the compound itself may be improved, and thus, the stability of the film formed therefrom may be expected. In the formula 2, when m exceeds 18, the viscosity and non-polarity of the material increase as the fluorine element is contained in excess, so the solubility in the electrolyte decreases, which may lead to a decrease in ionic conductivity and a deterioration in battery performance.

The compound represented by Formula 2 may include at least one selected from the group consisting of compounds represented by formulas 2-1 to 2-4, and may include at least one selected from the group consisting of compounds represented by Formulas 2-1 and 2-2:

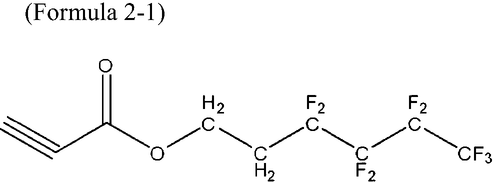

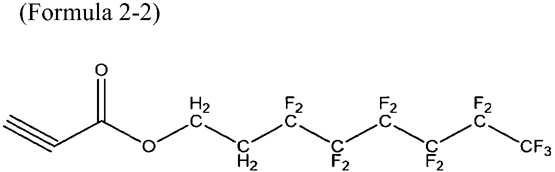

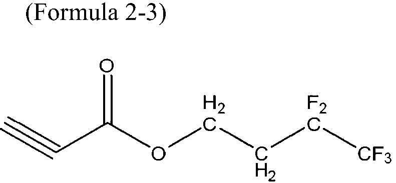

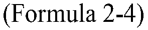

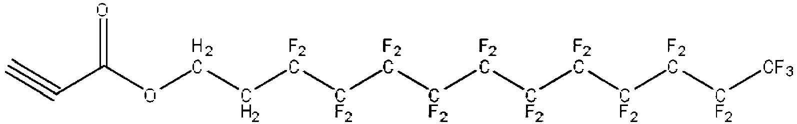

In Formula 3, R₂ and R₃ may be each independently an alkylene group having 1 to 5 carbon atoms, and R₄ may be an alkyl group having 3 to 20 carbon atoms substituted with one or more fluorine atoms.

In Formula 3, R₂ and R₃ may be each independently an alkylene group having 1 to 3 carbon atoms, and R₄ may be an alkyl group having 3 to 15 carbon atoms substituted with one or more fluorine atoms.

Alternatively, in Formula 3, R₄ may be an alkyl group having 4 to 8 carbon atoms substituted with one or more fluorine atoms.

Alternatively, according to one embodiment, the compound represented by Formula 3 may include a compound represented by the following Formula 3-1.

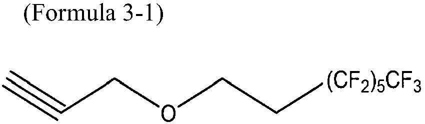

At least one of the compounds represented by Formulas 1 to 3 is included in the non-aqueous electrolyte in an amount of about 0.1 wt% to 3 wt%.

According to one embodiment, at least one of the compounds represented by Formulas 1 to 3 may be included in the non-aqueous electrolyte in an amount of about 0.1 wt % to 2.5 wt %, or about 0.2 wt % to 1 wt %.

Meanwhile, the non-aqueous electrolyte may further include an additional additive. When the non-aqueous electrolyte further includes an additional additive, at least one of the compounds represented by the formulas 1 to 3 described above may be expressed as a "first additive," and the additional additive may be expressed as a "second additive."

The additive may include other additional additives in addition to the compound represented by Formula 1, as needed, in order to suppress the non-aqueous electrolyte from being decomposed in a high-power environment and causing the negative electrode collapse, or to further improve low-temperature high-rate discharge characteristics, high-temperature stability, overcharge prevention, and high-temperature battery expansion suppression effects.

Examples of the additional additives include at least one selected from the group consisting of cyclic carbonate-based compounds, halogen-substituted carbonate-based compounds, sultone-based compounds, sulfate-based compounds, phosphate-based or phosphite-based compounds, borate-based compounds, nitrile-based compounds, benzene-based compounds, amine-based compounds, silane-based compounds, and lithium salt-based compounds.

The cyclic carbonate-based compound may be, for example, vinylene carbonate (VC) or vinylethylene carbonate.

The halogen-substituted carbonate-based compound may be, for example, fluoroethylene carbonate (FEC).

The sultone-based compound may be, for example, at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be, for example, ethylene sulfate (Esa), trimethylene sulfate (TMS), or methyl trimethylene sulfate (MTMS).

The phosphate-based or phosphite-based compound may be, for example, at least one compound selected from the group consisting of lithium difluoro(bisoxalato)phosphate, lithium difluorophosphate, tris(trimethylsilyl) phosphate, tris(trimethylsilyl) phosphite, tris(2,2,2-trifluoroethyl) phosphate, and tris(trifluoroethyl) phosphite.

The borate compounds may include tetraphenylborate, lithium difluoro(oxalato)borate (LiDFOB, LiB(C₂O₄)F₂), or lithium bisoxalatoborate (LiBOB, LiB(C₂O₄)₂).

The nitrile-based compound may be at least one compound selected from the group consisting of, for example, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, the amine-based compound may be triethanolamine or ethylenediamine, and the silane-based compound may be tetravinylsilane.

The lithium salt-based compound is a compound different from the lithium salt included in the non-aqueous electrolyte, and may include lithium difluorophosphate (LiPO₂F₂) or LiBF₄.

When the non-aqueous electrolyte includes vinylene carbonate, a more robust SEI film may be formed on the surface of the negative electrode during the initial activation process of the secondary battery.

The additional additive may be used by mixing two or more compounds, and the total content of the compound represented by the formula 1 and the additional additive may be included in an amount of about 50 wt% or less, or about 0.05 wt% to 20 wt%, or about 0.05 wt% to 10 wt%, based on the total weight of the non-aqueous electrolyte. When the total content of the additives satisfies the above range, the low-temperature output characteristics of the battery may be improved, the high-temperature storage characteristics and the high-temperature life characteristics may be more effectively improved, and the occurrence of side reactions of the battery due to the additives remaining after the reaction may be suppressed.

The lithium secondary battery according to the present invention as described above may be usefully used in portable devices such as mobile phones, laptop computers, and digital cameras, and electric vehicles such as hybrid electric vehicles (HEVs).

Therefore, according to another embodiment of the present invention, a battery module including the lithium secondary battery as a unit cell and a battery pack including the same are provided.

The battery module or battery pack may be used as a power source for one or more medium- to large-sized devices, including power tools; electric vehicles including electric vehicles (EVs), hybrid electric vehicles (HEVs), and plug-in hybrid electric vehicles (PHEVs); and power storage systems.

The shape of the lithium secondary battery of the present invention is not particularly limited, but may be cylindrical, square, pouch, or coin-shaped, using a can.

The lithium secondary battery according to the present invention may be used not only as a battery cell used as a power source for a small device, but also as a unit battery in a medium- to large-sized battery module including a plurality of battery cells.

Hereinafter, the present invention will be described through examples.

It should be noted that embodiments of the present invention may be modified into various different forms, and the scope of the present invention should not be construed as being limited to the examples described below. The examples of the present invention are provided to more completely explain the present invention to a person having average knowledge in the art.

### Examples and Comparative Examples

### 1. Loading Amount of Positive Electrode: 600 mg/25 cm²

### Example A-1

### (Preparation of Non-Aqueous Electrolyte)

An organic solvent was prepared by mixing ethylene carbonate (EC), ethyl methyl carbonate (EMC), and dimethyl carbonate (DMC) in a volume ratio of 30:60:10.

LiPF₆ as a lithium salt was dissolved in the organic solvent to a molar concentration of 1.0 M.

In addition, vinylene carbonate (VC) and a compound represented by Formula 1-1 were added to the organic solvent in which the lithium salt was dissolved, to prepare a non-aqueous electrolyte. The vinylene carbonate was included in the non-aqueous electrolyte in an amount of 1 wt%. The compound represented by Formula 1-1 was included in the non-aqueous electrolyte in an amount of 0.2 wt%.

### (Preparation of Secondary Battery)

A positive electrode slurry was prepared by adding lithium iron phosphate (LiFePO₄) particles having a carbon coating layer as a positive electrode active material, carbon black as a conductive material, and polyvinylidene fluoride (PVDF) as a binder to N-methyl-2-pyrrolidone (NMP) as a solvent at a weight ratio of 94:3:3. The positive electrode slurry was applied to a positive electrode current collector (Al thin film) having a thickness of 15 µm at a loading amount of 600 mg/25 cm² and dried, and then roll pressed to prepare a positive electrode. The average particle diameter (D50) of the positive electrode active material was 1.1 µm, and the lithium iron phosphate (LiFePO₄) particles having a carbon coating layer were in the form of primary particles.

A negative electrode slurry was prepared by adding artificial graphite as a negative electrode active material, SBR-CMC as a binder, and carbon black as a conductive material to water as a solvent at a weight ratio of 97:2:1. The negative electrode slurry was applied to a copper (Cu) thin film as a negative electrode current collector with a thickness of 15 µm at a loading amount of 300 mg/25 cm², dried, and then roll pressed to prepare a negative electrode.

The positive electrode, a polyolefin-based porous separator, and the negative electrode were sequentially stacked to prepare an electrode assembly.

The electrode assembly was placed in a battery case, and the prepared non-aqueous electrolyte was injected thereinto to manufacture a lithium secondary battery.

### Example A-2

A lithium secondary battery was manufactured in the same manner as in Example A-1, except that the compound represented by Formula 1-1 was included in the non-aqueous electrolyte in an amount of 1 wt%.

### Example A-3

A lithium secondary battery was manufactured in the same manner as in Example A-1, except that the compound represented by Formula 2-1 was included in the non-aqueous electrolyte in an amount of 0.2 wt% instead of the compound represented by the formula 1-1.

### Example A-4

A lithium secondary battery was manufactured in the same manner as in Example A-3, except that the compound represented by Formula 2-1 was included in the non-aqueous electrolyte in an amount of 1 wt%.

### Example A-5

A lithium secondary battery was manufactured in the same manner as in Example A-1, except that the compound represented by Formula 3-1 was included in the non-aqueous electrolyte in an amount of 0.2 wt% instead of the compound represented by Formula 1-1.

### Example A-6

A lithium secondary battery was manufactured in the same manner as in Example A-5, except that the compound represented by Formula 3-1 was included in the non-aqueous electrolyte in an amount of 1 wt%.

### Comparative Example A-1

A lithium secondary battery was manufactured in the same manner as in Example A-1, except that the compound represented by Formula 1-1 was not included in the non-aqueous electrolyte.

### Comparative Example A-2

A lithium secondary battery was manufactured in the same manner as in Example A-1, except that the compound represented by Formula 1-1 was included in the non-aqueous electrolyte in an amount of 0.05 wt%.

### Comparative Example A-3

A lithium secondary battery was manufactured in the same manner as in Example A-1, except that the compound represented by Formula 1-1 was included in the non-aqueous electrolyte in an amount of 5 wt%.

### Comparative Example A-4

A lithium secondary battery was manufactured in the same manner as in Example A-3, except that the compound represented by Formula 2-1 was included in the non-aqueous electrolyte in an amount of 0.05 wt%.

### Comparative Example A-5

A lithium secondary battery was manufactured in the same manner as in Example A-3, except that the compound represented by Formula 2-1 was included in the non-aqueous electrolyte in an amount of 5 wt%.

### Comparative Example A-6

A lithium secondary battery was manufactured in the same manner as in Example A-5, except that the compound represented by Formula 3-1 was included in the non-aqueous electrolyte in an amount of 0.05 wt%.

### Comparative Example A-7

A lithium secondary battery was manufactured in the same manner as in Example A-5, except that the compound represented by Formula 3-1 was included in the non-aqueous electrolyte in an amount of 5 wt%.

**[Table 1]**

| | Loading amount of positive electrode (mg/25 cm²) | Non-aqueous electrolyte | | | | | | |
|---|---|---|---|---|---|---|---|---|
| | | Organic solvent | | | Lithium salt | Additive | | Additive |
| | | EC (vol%) | EMC (vol%) | DMC (vol%) | LiPF₆ (mol/L) | Kind | Content (based on weight of non-aqueous electrolyte) | VC (wt%) |
| Example A-1 | 600 | 30 | 60 | 10 | 1 | Formula 1-1 | 0.2 | 1 |
| Example A-2 | 600 | 30 | 60 | 10 | 1 | Formula 1-1 | 1 | 1 |
| Example A-3 | 600 | 30 | 60 | 10 | 1 | Formula 2-1 | 0.2 | 1 |
| Example A-4 | 600 | 30 | 60 | 10 | 1 | Formula 2-1 | 1 | 1 |
| Example A-5 | 600 | 30 | 60 | 10 | 1 | Formula 3-1 | 0.2 | 1 |
| Example A-6 | 600 | 30 | 60 | 10 | 1 | Formula 3-1 | 1 | 1 |
| Comparative Example A-1 | 600 | 30 | 60 | 10 | 1 | - | - | 1 |
| Comparative Example A-2 | 600 | 30 | 60 | 10 | 1 | Formula 1-1 | 0.05 | 1 |
| Comparative Example A-3 | 600 | 30 | 60 | 10 | 1 | Formula 1-1 | 5 | 1 |
| Comparative Example A-4 | 600 | 30 | 60 | 10 | 1 | Formula 2-1 | 0.05 | 1 |
| Comparative Example A-5 | 600 | 30 | 60 | 10 | 1 | Formula 2-1 | 5 | 1 |
| Comparative Example A-6 | 600 | 30 | 60 | 10 | 1 | Formula 3-1 | 0.05 | 1 |
| Comparative Example A-7 | 600 | 30 | 60 | 10 | 1 | Formula 3-1 | 5 | 1 |

### 2. Loading Amount of Positive Electrode: 500 mg/25 cm²

### Example B-1

A lithium secondary battery was manufactured in the same manner as in Example A-1, except that the loading amount of the positive electrode was adjusted to 500 mg/25 cm² instead of 600 mg/25 cm².

### Example B-2

A lithium secondary battery was manufactured in the same manner as in Example B-1, except that the compound represented by Formula 1-1 was included in the non-aqueous electrolyte in an amount of 1 wt%.

### Comparative Example B-1

A lithium secondary battery was manufactured in the same manner as in Example B-1, except that the compound represented by Formula 1-1 was not included in the non-aqueous electrolyte.

### Comparative Example B-2

A lithium secondary battery was manufactured in the same manner as in Example B-1, except that the compound represented by Formula 1-1 was included in the non-aqueous electrolyte in an amount of 0.05 wt%.

### Comparative Example B-3

A lithium secondary battery was manufactured in the same manner as in Example B-1, except that the compound represented by Formula 1-1 was included in the non-aqueous electrolyte in an amount of 5 wt%.

**[Table 2]**

| | Loading amount of positive electrode (mg/25 cm²) | Non-aqueous electrolyte | | | | | | |
|---|---|---|---|---|---|---|---|---|
| | | Organic solvent | | | Lithium salt | Additive | | Additive |
| | | EC (vol%) | EMC (vol%) | DMC (vol%) | LiPF₆ (mol/L) | Kind | Content (based on weight of non-aqueous electrolyte) | VC (wt%) |
| Example B-1 | 500 | 30 | 60 | 10 | 1 | Formula 1-1 | 0.2 | 1 |
| Example B-2 | 500 | 30 | 60 | 10 | 1 | Formula 1-1 | 1 | 1 |
| Comparative Example B-1 | 500 | 30 | 60 | 10 | 1 | - | - | 1 |
| Comparative Example B-2 | 500 | 30 | 60 | 10 | 1 | Formula 1-1 | 0.05 | 1 |
| Comparative Example B-3 | 500 | 30 | 60 | 10 | 1 | Formula 1-1 | 5 | 1 |

### 3. Loading Amount of Positive Electrode: 400 mg/25 cm²

### Comparative Example C-1

A lithium secondary battery was manufactured in the same manner as in Example A-2, except that the loading amount of the positive electrode was adjusted to 400 mg/25 cm² instead of 600 mg/25 cm².

### Comparative Example C-2

A lithium secondary battery was manufactured in the same manner as in Comparative Example C-1, except that the compound represented by Formula 1-1 was not included in the non-aqueous electrolyte.

**[Table 3]**

| | Loading amount of positive electrode (mg/25 cm²) | Non-aqueous electrolyte | | | | | | |
|---|---|---|---|---|---|---|---|---|
| | | Organic solvent | | | Lithium salt | Additive | | Additive |
| | | EC (vol%) | EMC (vol%) | DMC (vol%) | LiPF₆ (mol/L) | Kind | Content (based on weight of non-aqueous electrolyte) | VC (wt%) |
| Comparative Example C-1 | 400 | 30 | 60 | 10 | 1 | Formula 1-1 | 1 | 1 |
| Comparative Example C-2 | 400 | 30 | 60 | 10 | 1 | - | - | 1 |

### 4. Loading Amount of Positive Electrode: 750 mg/25 cm²

### Comparative Example D-1

A lithium secondary battery was manufactured in the same manner as in Example A-2, except that the loading amount of the positive electrode was adjusted to 750 mg/25 cm² instead of 600 mg/25 cm².

### Comparative Example D-2

A lithium secondary battery was manufactured in the same manner as in Comparative Example D-1, except that the compound represented by Formula 1-1 was not included in the non-aqueous electrolyte.

**[Table 4]**

| | | Non-aqueous electrolyte | | | | | | |
|---|---|---|---|---|---|---|---|---|
| | Loading amount | Organic solvent | | | Lithium salt | Additive | | Additive |
| | positive of positive electrode (mg/25cm²) | EC(vol%) | EMC(vol%) | DMC(vol%) | LiPF₆(mol/L) | Kind | Content (based on weight of non-aqueous electrolyte) | VC(wt%) |
| Comparative ExampleD-1 | 750 | 30 | 60 | 10 | 1 | Formula 1-1 | 1 | 1 |
| Comparative ExampleD-2 | 750 | 30 | 60 | 10 | 1 | - | | 1 |

### Experimental Example

### Experimental Example 1: Evaluation of Low-Temperature Discharge Capacity

The low-temperature discharge capacity of the lithium secondary batteries manufactured according to Examples A-1 to A-6, Comparative Examples A-1 to A-7; Examples B-1 and B-2, Comparative Examples B-1 to B-3; Comparative Examples C-1 and C-2; and Comparative Examples D-1 and D-2 was evaluated.

The lithium secondary batteries were charged to 3.65 V at 0.2 C at -10 °C and discharged to 2.5 V at 0.33 C to perform initial charge/discharge, and the initial discharge capacity (unit: mAh) at this time was measured.

### Experimental Example 2: Evaluation of Low-Temperature Output Characteristics

The low-temperature output characteristics of the lithium secondary batteries manufactured according to Examples A-1 to A-6, Comparative Examples A-1 to A-7; Examples B-1 and B-2, Comparative Examples B-1 to B-3; Comparative Examples C-1 and C-2; and Comparative Examples D-1 and D-2 was evaluated.

The lithium secondary batteries were charged to state of charge (SOC) of 100% at 0.33C at 25 °C, and a direct current internal resistance (DC-IR) was calculated through the voltage drop that appeared when a discharge pulse was applied at 1.5 C at -10 °C. At this time, the time of applying the discharge pulse was 0.1 seconds or 10 seconds.

### Experimental Result 1. Loading Amount of Positive Electrode: 600 mg/25 cm²

**[Table 5]**

| | Loading amount of positive electrode (mg/25 cm²) | Experimental Example 1 | Experimental Example 2 | |
|---|---|---|---|---|
| | | Initial discharge capacity (mAh, at -10 °C) | 0.1s DC-IR (mOhm) | 10s DC-IR (mOhm) |
| Example A-1 | 600 | 1046 | 240 | 351 |
| Example A-2 | 600 | 1058 | 241 | 348 |
| Example A-3 | 600 | 1040 | 242 | 353 |
| Example A-4 | 600 | 1051 | 243 | 351 |
| Example A-5 | 600 | 1033 | 245 | 359 |
| Example A-6 | 600 | 1042 | 246 | 356 |
| Comparative Example A-1 | 600 | 863 | 254 | 373 |
| Comparative Example A-2 | 600 | 876 | 253 | 371 |
| Comparative Example A-3 | 600 | 875 | 257 | 376 |
| Comparative Example A-4 | 600 | 874 | 253 | 372 |
| Comparative Example A-5 | 600 | 880 | 258 | 378 |
| Comparative Example A-6 | 600 | 871 | 254 | 373 |
| Comparative Example A-7 | 600 | 866 | 260 | 380 |

Referring to Table 5, it can be seen that the lithium secondary batteries of Examples A-1 to A-6, which include a positive electrode including lithium iron phosphate particles as a positive electrode active material and having a loading amount of 450 mg/25 cm² to 740 mg/25 cm²; and a non-aqueous electrolyte including at least one compound represented by Formulas 1 to 3 in an appropriate amount, exhibit superior capacity development effect and superior low-temperature output performance compared to those of Comparative Examples A-1 to A-7.

The lithium secondary batteries of Comparative Examples A-1 to A-7 not only exhibit lower capacities compared to those of Examples A-1 to A-6, but also exhibit poor low-temperature output characteristics. For example, the lithium secondary batteries of Comparative Examples A-2 to A-7 exhibit output characteristics that are not improved at all or rather tend to increase compared to that of Comparative Example A-1, which does not include an additive, because the content of the additive is too small or too large.

### Experimental Result 2. Loading Amount of Positive Electrode: 500 mg/25 cm²

**[Table 6]**

| | Loading amount of positive electrode (mg/25 cm²) | Experimental Example 1 | Experimental Example 2 | |
|---|---|---|---|---|
| | | Initial discharge capacity (mAh, at -10 °C) | 0.1s DC-IR (mOhm) | 10s DC-IR (mOhm) |
| Example B-1 | 500 | 868 | 285 | 414 |
| Example B-2 | 500 | 877 | 287 | 413 |
| Comparative Example B-1 | 500 | 720 | 302 | 434 |
| Comparative Example B-2 | 500 | 733 | 299 | 431 |
| Comparative Example B-3 | 500 | 710 | 310 | 441 |

Referring to Table 6, it can be seen that the lithium secondary batteries of Examples B-1 and B-2, which include a positive electrode including lithium iron phosphate particles as a positive electrode active material and having a loading amount of 450 mg/25 cm² to 740 mg/25 cm²; and a non-aqueous electrolyte including at least one compound represented by Formulas 1 to 3 in an appropriate amount, exhibit superior capacity development effect and superior low-temperature output performance compared to those of Comparative Examples B-1 to B-3.

### Experimental Result 3. Loading Amount of Positive Electrode: 400 mg/25 cm²

**[Table 7]**

| | Loading amount of positive electrode (mg/25 cm²) | Experimental Example 1 | Experimental Example 2 | |
|---|---|---|---|---|
| | | Initial discharge capacity (mAh, at -10 °C) | 0.1s DC-IR (mOhm) | 10s DC-IR (mOhm) |
| Comparative Example C-1 | 400 | 579 | 375 | 559 |
| Comparative Example C-2 | 400 | 580 | 374 | 559 |

Referring to Table 7, in the case of the positive electrode including lithium iron phosphate particles as a positive electrode active material and having a loading amount of less than 450 mg/25 cm², it can be confirmed that there is no effect in capacity or output regardless of the use of the compounds represented by Formulas 1 to 3 as a non-aqueous electrolyte additive.

### Experimental Result 4. Loading Amount of Positive Electrode: 750 mg/25 cm²

**[Table 8]**

| | Loading amount of positive electrode (mg/25 cm²) | Experimental Example 1 | Experimental Example 2 | |
|---|---|---|---|---|
| | | Initial discharge capacity (mAh, at -10 °C) | 0.1s DC-IR (mOhm) | 10s DC-IR (mOhm) |
| Comparative Example D-1 | 750 | 1056 | 198 | 303 |
| Comparative Example D-2 | 750 | 1057 | 198 | 302 |

Referring to Table 8, in the case of the positive electrode including lithium iron phosphate particles as a positive electrode active material and having a loading amount of greater than 740 mg/25 cm², it can be confirmed that there is no effect in capacity or output regardless of the use of the compounds represented by Formulas 1 to 3 as a non-aqueous electrolyte additive.

From the foregoing, it will be appreciated that various embodiments of the present invention have been described herein for purposes of illustration, and that various modifications may be made without departing from the scope and spirit of the present invention.

Therefore, the technical scope of the present invention should not be limited to the contents described in the detailed description of the specification, but should be defined by the scope of the patent claims.

## Claims

1. A lithium secondary battery comprising:
a positive electrode;
a negative electrode;
a separator; and
a non-aqueous electrolyte,
wherein the positive electrode includes a positive electrodeactive material,
the positive electrode active material includes lithium iron phosphate particles,
a loading amount of the positive electrode is 450 mg/25 cm² to 740 mg/25 cm²,
the non-aqueous electrolyte includes a lithium salt, an organic solvent, and an additive,
the additive includes at least one selected from the group consisting of compounds represented by Formulas 1 to 3 below, and
the additive is included in the non-aqueous electrolyte in an amount of 0.1 wt% to 3 wt%: 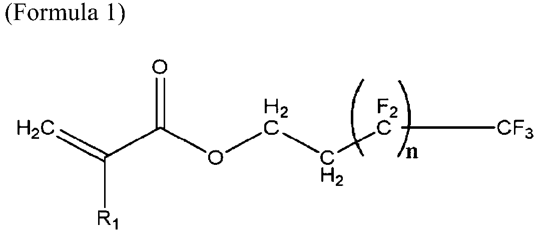
wherein R₁ is hydrogen or an alkyl group having 1 to 3 carbon atoms, and n is an integer of 1 to 10; 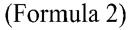 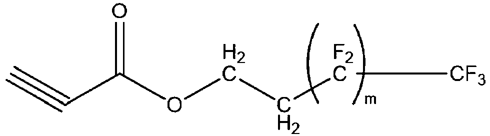
wherein m is an integer of 0 to 18; 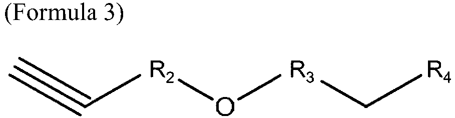
wherein R₂ and R₃ are each independently an alkylene group having 1 to 10 carbon atoms, and R₄ is an alkyl group having 1 to 20 carbon atoms that is substituted with one or more fluorine atoms.

2. The lithium secondary battery according to claim 1, wherein, in Formula 1, n is an integer of 3 to 8.

3. The lithium secondary battery according to claim 1, wherein, in Formula 1, R₁ is hydrogen.

4. The lithium secondary battery according to claim 1, wherein the compound represented by Formula 1 includes at least one selected from the group consisting of compounds represented by Formulas 1-1 to 1-3:

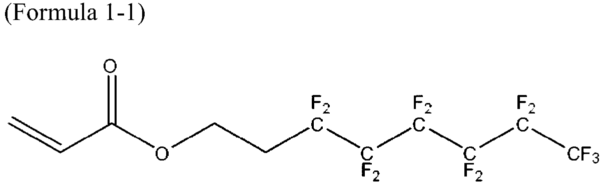

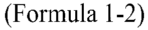

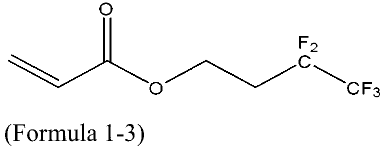

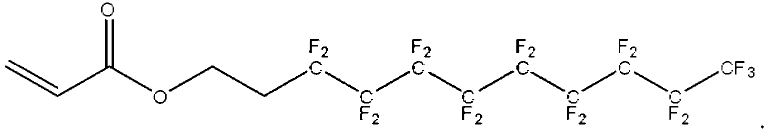

5. The lithium secondary battery according to claim 1, wherein, in Formula 2, m is an integer of 2 to 8.

6. The lithium secondary battery according to claim 1, wherein the compound represented by Formula 2 includes at least one selected from the group consisting of compounds represented by Formulas 2-1 to 2-4:

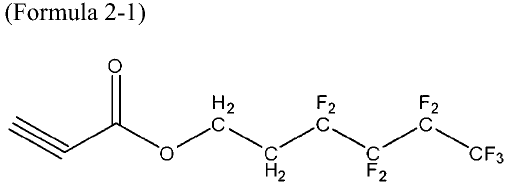

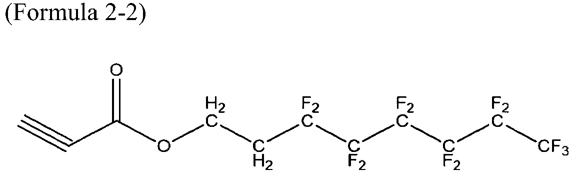

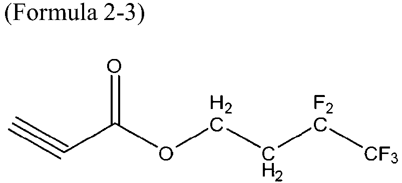

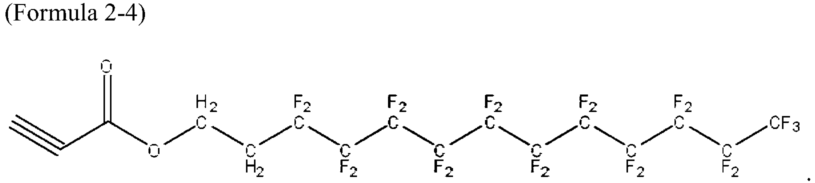

7. The lithium secondary battery according to claim 1, wherein, in Formula 3, R₂ and R₃ are each independently an alkylene group having 1 to 5 carbon atoms, and R₄ is an alkyl group having 3 to 20 carbon atoms that is substituted with one or more fluorine atoms.

8. The lithium secondary battery according to claim 1, wherein, in Formula 3, R₄ is an alkyl group having 4 to 8 carbon atoms that is substituted with one or more fluorine atoms.

9. The lithium secondary battery according to claim 1, wherein the compound represented by Formula 3 includes a compound represented by Formula 3-1:

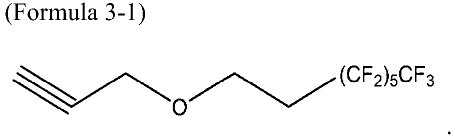

10. The lithium secondary battery according to claim 1, wherein the loading amount of the positive electrode is 500 mg/25 cm² to 600 mg/25 cm².

11. The lithium secondary battery according to claim 1, wherein the non-aqueous electrolyte further includes vinylene carbonate.

12. The lithium secondary battery according to claim 1, wherein the organic solvent includes a cyclic carbonate-based solvent and a linear carbonate-based solvent.

13. The lithium secondary battery according to claim 12, wherein the linear carbonate-based solvent includes dimethyl carbonate.

14. The lithium secondary battery according to claim 1, wherein the lithium iron phosphate particles include a compound represented by Formula A:
(Formula A) Li₁₊ₐFe₁₋ₛMₛ(PO_{4-b})X_{b}
wherein, M is at least one element selected from Co, Ni, Mn, Al, Mg, Ti, and V, X is F, S, or N, and s, a, and b satisfy 0≤s≤0.5, -0.5≤a≤+0.5, 0≤b≤0.1, respectively.

15. The lithium secondary battery according to claim 1, wherein the lithium iron phosphate particles include LiFePO₄.
